# FASCICULE DE BREVET EUROPEEN

(11) **EP 0 449 753 B1**
(45) Date de publication et mention de la délivrance du brevet: **17.05.1995**
(21) Numéro de dépôt: 91420099.3
(22) Date de dépôt: 25.03.1991
(51) Int. Cl.: G01N 27/90

(54) **Procédé et dispositif de contrôle de tubes métalliques par courants de Foucault**
Verfahren und Vorrichtung zur Kontrolle von metallischen Rohren unter Verwendung von Wirbelströmen
Method and apparatus for inspecting metallic pipes by means of eddy currents

(30) Priorité: 26.03.1990 FR 9004053
(43) Date de publication de la demande: 02.10.1991
(73) Titulaire: VALLOUREC INDUSTRIES, F-92100 Boulogne-Billancourt (FR)
(72) Inventeur: Bisiaux, Bernard, F-59300 Valenciennes (FR)
(74) Mandataire: Desolneux, Jean-Paul Charles

(56) Documents cités:
- US-A- 3 916 301
- US-A- 4 355 281
- US-A- 4 503 392
- PATENT ABSTRACTS OF JAPAN, vol. 7, no. 90 (P-191)[1235], 14 avril 1983;& JP-A-58 17 354
- PATENT ABSTRACTS OF JAPAN, vol. 7, no. 130 (P-202)[1275], 7 juin 1983;& JP-A-58 48 848

## Description

Le procédé et le dispositif qui font l'objet de l'invention concernent la détection de défauts et leur discrimination en gravité sur des tubes métalliques au défilé au moyen des courants de Foucault.

On connaît des moyens de contrôle de défauts sur des tubes métalliques qui font appel aux courants de Foucault. Ces moyens comprennent un solénoïde alimenté par un courant de fréquence relativement élevée qui génère un champ magnétique alternatif. Ce champ magnétique alternatif engendre à son tour des courants de Foucault dans la paroi du tube lesquels interagissent avec les défauts présents sous forme de discontinuités dans le métal ou alliage à contrôler. On détecte ces interactions au moyen d'au moins un solénoïde récepteur dont on mesure les variations d'impédance au passage des défauts. L'utilisation d'un solénoïde récepteur comportant deux enroulements en opposition permet d'accroître la sensibilité de la mesure.

Dans le cas des métaux magnétiques, tels que les aciers au carbone, ces mêmes moyens de contrôle peuvent être utilisés à condition de saturer ce métal au moyen d'un champ magnétique continu suffisamment intense pour que sa perméabilité soit réduite à un niveau constant pour un produit déterminé et comparable à celle d'un métal ou alliage amagnétique. Dans le cas d'un acier au carbone cette perméabilité est ainsi ramenée pratiquement au niveau de celle d'un acier austénitique.

Il est ainsi possible de détecter des défauts de relativement petites dimensions, tels que des fissures ou des décohésions de plus ou moins grande profondeur voire traversantes qui sont sources de fuites. On effectue un tel contrôle en continu en faisant circuler les tubes à travers les solénoïdes du dispositif de détection par courants de Foucault à des vitesses pouvant atteindre plusieurs mètres par seconde.

Le brevet US 4,355,281 décrit un procédé de détection par courants de Foucault de défauts de surface sur une pièce de résolutions. Ce procédé utilise une paire d'enroulements détecteurs dont l'axe est orienté radialement à proximité de la paroi d'une pièce de révolution, enroulements disposés à faible distanre l'un de l'autre le long d'une génératrice de la paroi de la pièce. Cette pièce est entraînée à la fois le long de son axe et autour de celui-ci, de sorte que chacun des détecteurs balaye une bande hélicoïdale différente du produit.

Des moyens adaptés permettent d'exciter les deux enroulements à des fréquences légèrement différentes et des moyens de détection permettent de capter séparément les signaux résultant, pour chaque enroulement, des interactions produites, au niveau de chaque défaut, par sa propre fréquence d'excitation.

Un circuit de corrélation permet de détecter l'apparition simultanée de signaux provenant des deux enroulements et de calculer une valeur égale au produit des amplitudes de ces deux signaux. Le signal résultant obtenu indique l'existence d'un défaut qui s'étend sur une longueur telle qu'il est détecté par les deux détecteurs. Les fréquences utilisées, relativement élevées, par exemple 27 et 33 KHz concernent la détection des défauts superficiels.

L'expérience montre que ces différents moyens de contrôle ne permettent pas d'identifier de façon sûre,dans l'ensemble des défauts détectés, ceux qui sont susceptibles de causer des fuites à travers la paroi d'un tube. En effet un défaut superficiel peut donner un signal dont l'amplitude peut être égale ou supérieure à celle d'un signal correspondant à un défaut de relativement grande profondeur. Or seuls d'une façon générale peuvent être récupérés par retouches ou réparations les tubes présentant des défauts superficiels, les autres tubes à défauts profonds étant à éliminer.

Pour ces raisons il est dans beaucoup de cas nécessaire de vérifier l'importance des défauts détectés par courants de Foucault au moyen d'une autre méthode telle que l'inspection visuelle ou l'épreuve hydraulique d'étanchéité.

De tels essais hydrauliques permettent de constater que seulement une faible proportion des tubes rejetés au cours du contrôle par courants de Foucault, pour défauts débouchants donnant un signal d'amplitude correspondant à celui d'un défaut étalon, présente effectivement des fuites sous pression interne de fluide.

On a recherché la possibilité de mettre en oeuvre des moyens de contrôle par courants de Foucault permettant sur la paroi de tubes métalliques de tous types de sélectionner parmi l'ensemble des défauts internes ou des défauts débouchants sur la surface extérieure du tube détectés les défauts de profondeur relativement importante des défauts superficiels. Le cas échéant les défauts peuvent déboucher sur la surface intérieure du tube que ceux-ci soient internes ou débouchant également sur la surface extérieure du tube (défauts traversants).

On a recherché en particulier la possibilité de déterminer un seuil de rejet garantissant de façon quasi certaine le rejet de tubes présentant des défauts qui en traversent presque complètement l'épaisseur tout en n'entraînant pas le rejet simultané d'une quantité importante de tubes présentant seulement des défauts débouchant sur la surface extérieure du tube de profondeur pas supérieure à environ 10 % de l'épaisseur du tube. On a recherché enfin la possibilité d'effectuer de tels contrôles au défilé à des vitesses de plusieurs mètres par seconde sur des tubes de diamètre extérieur pouvant atteindre ou dépasser 200 mm et d'épaisseur pouvant atteindre au moins 10 % du diamètre.

Le procédé et le dispositif qui font l'objet de l'invention permettent d'obtenir de tels résultats.

Le procédé de l'invention consiste à faire passer un tube métallique qui défile en continu, au voisinage immédiat de moyens de contrôle par courants de Foucault pour provoquer des interactions entre les courants de Foucault générés dans la paroi du tube et les défauts de celui-ci, que ceux-ci soient des défauts internes ou des défauts débouchant sur la surface extérieure du tube, ces interactions étant ensuite détectées et l'amplitude des signaux qui en résultent mesurée par des moyens connus. Les courants de Foucault sont générés dans la paroi du tube au moyen de deux champs alternatifs de fréquences déterminées différentes dans le domaine des moyennes et hautes fréquences.

Suivant l'invention pour chaque défaut susceptible d'être détecté on mesure les amplitudes des signaux d'interaction de ce défaut avec les courants de Foucault correspondant à chacune de ces deux fréquences, l'amplitude S1 étant celle correspondant à la fréquence la moins élevée et l'amplitude S2 celle correspondant à l'autre fréquence plus élevée, ces amplitudes étant exprimées en décibels. On détermine ensuite la différence D = S2 - S1 exprimée en décibels et on compare cette différence D à une différence de rejet Do qui est celle qui correspond à un trou étalon percé à partir de la surface extérieure du tube d'une profondeur déterminée au moins égale à 5 % de l'épaisseur de la paroi du tube et ne dépassant pas 50 % de l'épaisseur de la paroi du tube. On rejette les tubes pour lesquels on a D inférieur à Do.

Avantageusement pour les applications sévères par exemple nécessitant des pressions internes élevées la différence Do qui constitue le seuil de rejet correspond à un trou étalon de profondeur pas supérieure à 20 % de l'épaisseur de la paroi du tube.

De préférence on utilise comme fréquence la moins élevée du champ magnétique alternatif, une fréquence déterminée comprise entre 0,5 et 10 Khz et de préférence comprise entre 1 et 3 Khz. La fréquence plus élevée est de préférence comprise entre 20 et 150 Khz.

Lorsqu'on effectue le contrôle au défilé de tubes en métaux ou alliages magnétiques on sature ces métaux ou alliages au moyen d'un champ magnétique continu généré par un enroulement parcouru par un courant continu qui entoure les moyens de génération des champs magnétiques alternatifs et les moyens de détection des signaux correspondant aux interactions entre les défauts et les courants de Foucault.

L'invention concerne aussi un dispositif pour la mise en oeuvre du procédé qui vient d'être décrit. Ce dispositif permet de détecter au défilé des défauts existant sur la paroi d'un tube métallique qu'il s'agisse de défauts internes ou de défauts débouchant sur la surface extérieure du tube au moyen de courants de Foucault. Il comprend des moyens permettant de faire défiler suivant un axe, à vitesse constante, un tube métallique et des moyens de génération de champs magnétiques alternatifs à deux fréquences différentes déterminées dans le domaine comprenant les moyennes et les hautes fréquences.

Suivant l'invention il comprend des moyens de détection des signaux résultant des interactions entre chaque défaut et les courants de Foucault correspondant à chacune des deux fréquences des champs magnétiques, des moyens d'enregistrement et de mesure permettant de calculer la différence en décibels D = S2 - S1 des amplitudes exprimées en décibels des signaux S2 et S1 obtenus respectivement à la fréquence la plus élevée et la plus faible, et des moyens de comparaison permettant de constater si D est supérieur ou inférieur à une valeur Do, des moyens de signalisation permettant de faire apparaître un signal de rejet du tube si D est inférieur à Do.

De préférence le dispositif comporte des moyens permettant de réaliser deux champs magnétiques alternatifs dont les fréquences sont dans le domaine compris d'une part entre 0,5 et 10 Khz et d'autre part entre 20 et 150 Khz.

Les moyens de génération des champs magnétiques alternatifs comprennent avantageusement ou bien au moins un solénoïde à l'intérieur duquel est logé au moins un solénoïde de détection, ces solénoïdes ayant un axe commun qui est également l'axe de défilement des tubes métalliques à contrôler, ou bien au moins un solénoïde effectuant l'émission et la détection.

De façon avantageuse le solénoïde de détection comporte deux enroulements en opposition montés côte à côte pour accroître la sensibilité de détection.

Suivant un premier mode de réalisation les moyens de génération des champs magnétiques alternatifs comprennent deux solénoïdes disposés à la suite l'un de l'autre le long de l'axe de défilement des tubes et alimentés le premier à la fréquence la plus basse et le second à la fréquence la plus élevée. Chacun de ces solénoïdes entoure un solénoïde de détection relié aux moyens de mesure de l'amplitude des interactions et de comparaison de la différence en décibels de ces amplitudes avec une valeur de rejet.

Ces solénoïdes sont avantageusement des solénoïdes encerclant le tube à contrôler.

Des moyens de mémorisation permettent de mettre en mémoire l'amplitude de chaque signal de défaut détecté au passage à travers le premier solénoïde de détection pour le faire correspondre au signal relatif à ce même défaut détecté au passage à travers le deuxième solénoïde en tenant compte du temps de parcours nécessaire grâce à des moyens de calcul.

Suivant un mode particulier de réalisation du dispositif on peut utiliser un seul solénoïde pour la génération des champs magnétiques alternatifs en excitant simultanément de façon connue ce solénoïde au moyen de deux sources de courants de fréquences différentes. De même on utilise un seul solénoïde de détection, des moyens de discrimination permettant de séparer et de traiter les signaux d'interaction des courants de Foucault de fréquences différentes avec un même défaut.

Dans le cas où on contrôle des tubes en métaux ou alliages magnétiques le dispositif comporte un enroulement dont l'axe correspond à l'axe de défilement du tube et qui est alimenté en courant continu pour générer un champ magnétique d'une intensité suffisante pour saturer ce métal et ramener sa perméabilité à un niveau comparable à celle d'un métal ou alliage amagnétique. Les dimensions de cet enroulement sont déterminées pour qu'il permette de loger à la fois les solénoïdes d'émission et de détection.

Le procédé et le dispositif suivant l'invention s'appliquent à des tubes en métaux ou alliages de tous types, ayant de préférence une forme de révolution. Les dimensions de ces tubes sont de préférence inférieures ou égales à 200 mm de diamètre extérieur avec des épaisseurs de parois de 1 à 20 % du diamètre, l'épaisseur étant de préférence limitée à 20 mm.

De très nombreuses modifications peuvent être apportées au procédé et au dispositif suivant l'invention qui ne sortent pas du domaine de celle-ci.

Les figures et les exemples ci-après décrivent, de façon non limitative, des modes particuliers de réalisation du dispositif suivant l'invention.

La figure 1 est une vue schématique d'ensemble d'un mode de réalisation du dispositif suivant l'invention.

La figure 2 représente une courbe permettant de déterminer les seuils de rejet des tubes en fonction de la profondeur acceptable des défauts.

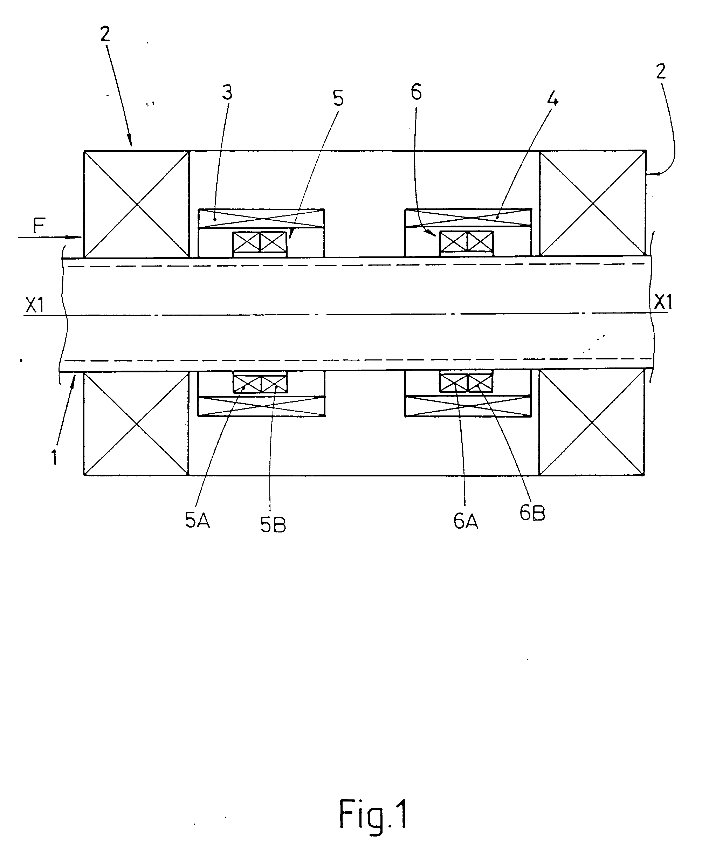

La figure 1 est une vue d'ensemble, purement schématique, d'un dispositif pour la mise en oeuvre du procédé suivant l'invention. Elle concerne le contrôle d'un tube de révolution en acier au carbone dont seul un tronçon 1 est représenté, disposé suivant l'axe de défilement X1-X1.

Ce tube se déplace le long de cet axe X1-X1 dans le sens de la flèche F à une vitesse constante dans l'intervalle compris entre 1 et 20 m/sec. Ce contrôle est fait à une température voisine de l'ambiante. Un solénoïde 2 disposé suivant le même axe X1-X1 est alimenté en courant continu par des moyens non représentés de façon à générer un champ magnétique continu dont l'intensité est déterminée pour saturer le tube 1 dans la zone intérieure au solénoïde 2. La perméabilité résiduelle du tube 1 dans cette zone est ainsi proche de celle d'un acier austénitique.

Les deux solénoïdes 3 et 4 génèrent chacun un champ magnétique alternatif dont les fréquences différentes se trouvent dans le domaine des moyennes et hautes fréquences, la fréquence du champ généré par le solénoïde 3 étant inférieure à celle du solénoïde 4. Ces deux solénoïdes sont disposés l'un à la suite de l'autre suivant l'axe X1-X1 et reliés à des sources de courant non représentées. La fréquence du champ généré par le solénoïde 3 est choisie dans l'intervalle compris entre 0,5 et 10 Khz et celle du solénoïde 4 entre 20 et 150 Khz. A l'intérieur du solénoïde 3 est logé un solénoïde de détection 5 comprenant deux enroulements côte à côte 5A, 5B, d'axe X1-X1, montés en opposition. De même à l'intérieur du solénoïde 4 est monté le deuxième solénoïde de détection 6 qui comprend deux enroulements 6A, 6B montés côte à côte en opposition et d'axe X1-X1. Ces deux solénoïdes de détection 5, 6 sont reliés de façon connue à des moyens connus de mesure d'impédance qui permettent de détecter les variations d'impédance produites par le passage d'un défaut localisé dans la paroi du tube 1 que ce défaut soit un défaut interne ou un défaut débouchant sur la surface extérieure du tube. Ces variations d'impédance résultent des interactions entre ce défaut et les courants de Foucault créés par les champs magnétiques alternatifs existant dans les solénoïdes 3 et 4. Ces variations d'impédance se traduisent, au niveau des moyens de mesure, non représentés, par des signaux dont l'amplitude est exprimée en décibels. Pour chaque défaut détecté par le solénoïde 5 on obtient un signal S1 et pour le même défaut un signal S2 au passage à travers le solénoïde 6. Des moyens de mémorisation permettent de mettre en mémoire le signal S1 pour pouvoir le comparer au signal S2 à l'instant où il est détecté par le solénoïde 6, des moyens de retard tenant compte de la distance entre les deux solénoïdes et de la vitesse de défilement permettant de comparer avec certitude les deux signaux S1 et S2 appartenant à un même défaut. Des moyens de calcul permettent de déterminer la différence D = S2-S1 exprimée en décibels et de la comparer à une différence de rejet Do qui correspond aux signaux détectés au passage d'un trou étalon réalisé sur la paroi d'un tube à travers le dispositif de la figure 1.

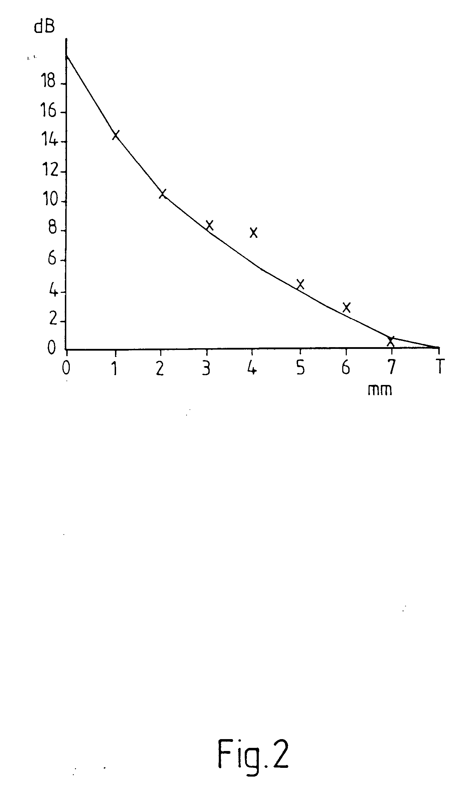

On voit figure 2 une courbe qui montre la variation de D en fonction de la profondeur de perçage sur la paroi extérieure d'un tube de trous étalons de mêmes diamètres orientés dans une direction radiale. Dans le cas de cette figure il s'agit de trous de 4 mm de diamètre à fond plat percés à partir de la surface extérieure à travers la paroi de 8 mm d'épaisseur d'un tube d'acier au carbone de 60 mm de diamètre extérieur. Pour le tracé de cette courbe la fréquence du champ magnétique généré par le solénoïde 3 est de 1,6 Khz et la fréquence du champ magnétique généré par le solénoïde 4 est de 60 Khz. Sur la figure 2 ce sont les profondeurs de perçage en mm qui figurent en abscisse et les différences en décibels D = S2-S1 qui figurent en ordonnée. L'amplification des signaux S1 et S2 est ajustée de façon que, pour un trou traversant, de profondeur égale à 8mm les amplitudes de S1 et S2 sont égales, D étant alors égal à 0. En fonction des applications des tubes on choisit comme différence ou seuil de rejet une valeur Do qui correspond à un trou étalon de relativement faible profondeur. Ainsi comme le montre la courbe un défaut de seulement un millimètre de profondeur correspond à une différence D1 de 14 décibels. En choisissant comme valeur de rejet cette différence D1 on est à peu près sûr de ne pas laisser passer de défauts de profondeur supérieure à 1 mm à condition de rejeter tous les tubes qui présentent des défauts ayant des différences D inférieures à D1.

## Revendications

1. Procédé de détection au défilé, suivant un axe, de défauts existant dans la paroi d'un tube métallique dans lequel on provoque la formation de courants de Foucault dans cette paroi par génération de deux champs alternatifs de fréquences déterminées différentes, dans le domaine des moyennes et hautes fréquences, et dans lequel on détecte les interactions entre ces courants de Foucault et les défauts internes ou débouchant sur la surface extérieure du tube et on mesure les interactions caractérisé en ce qu'on mesure pour chaque défaut les amplitudes des signaux d'interactions de ce défaut avec les courants de Foucault correspondant à chacune de ces deux fréquences, l'amplitude S1 étant celle correspondant à la fréquence la moins élevée et l'amplitude S2 étant celle correspondant à l'autre fréquence plus élevée, ces amplitudes étant exprimées en décibels, puis on détermine la différence D = S2 - S1 exprimée en décibels que l'on compare avec une différence ou seuil de rejet Do qui correspond à un trou étalon percé à partir de la surface extérieure du tube de profondeur déterminée au moins égale à 5 % de l'épaisseur de la paroi du tube et pas supérieure à 50 % de l'épaisseur de la paroi du tube et on rejette un tube comportant au moins un défaut présentant une différence D inférieure à Do.

2. Procédé suivant revendication 1 caractérisé en ce qu'on utilise comme seuil de rejet une différence Do correspondant à un trou étalon percé à partir de la surface extérieure du tube de profondeur pas supérieure à 20 % de l'épaisseur de la paroi du tube.

3. Procédé suivant revendication 1 ou 2 caractérisé en ce que la fréquence la moins élevée des champs magnétiques alternatifs est comprise entre 0,5 et 10 Khz et la plus élevée entre 20 et 150 Khz.

4. Procédé suivant revendication 3 caractérisé en ce que la fréquence la moins élevée du champ magnétique alternatif est comprise entre 1 et 3 Khz.

5. Procédé suivant l'une des revendications 1 à 4 caractérisé en ce que, lorsqu'on effectue le contrôle au défilé de tubes en métaux ou alliages magnétiques on sature ces métaux ou alliages au moyen d'un champ magnétique continu au sein duquel se trouvent les moyens de génération des champs magnétiques alternatifs et les moyens de détection des signaux correspondant aux interactions entre les défauts et les courants de Foucault.

6. Dispositif permettant la mise en oeuvre d'un procédé de détection au défilé, par courants de Foucault, de défauts existant sur la paroi d'un tube métallique (1), ces défauts étant soit des défauts internes soit des défauts débouchant sur la surface extérieure du tube, comprenant des moyens permettant de faire défiler suivant un axe (X1-X1), à vitesse constante, ledit tube métallique (1) et des moyens de génération de champs magnétiques alternatifs à deux fréquences différentes déterminées dans le domaine comprenant les moyennes et les hautes fréquences, caractérisé en ce qu'il comprend des moyens de détection des signaux résultant des interactions entre chaque défaut et les courants de Foucault correspondant à chacune des deux fréquences des champs magnétiques, des moyens d'enregistrement et de mesure permettant de calculer la différence en décibels D = S2 - S1 des amplitudes exprimées en décibels des signaux S2 et S1 obtenus respectivement à la fréquence la plus élevée et la plus faible et des moyens de comparaison permettant de constater si D est supérieur ou inférieur à une valeur Do constituant un seuil de rejet, des moyens de signalisation permettant de faire apparaître un signal de rejet du tube si D est inférieur à Do.

7. Dispositif suivant revendication 6 caractérisé en ce qu'il comporte des moyens permettant de réaliser deux champs magnétiques alternatifs dont les fréquences sont pour le premier champ entre 0,5 Khz et 10 Khz et pour le deuxième entre 20 et 150 Khz.

8. Dispositif suivant revendication 7 caractérisé en ce que les moyens de génération des champs magnétiques alternatifs comprennent au moins un solénoïde (3, 4) à l'intérieur duquel est logé au moins un solénoïde de détection (5,6) ces solénoïdes ayant un axe commun (X1-X1) qui est également l'axe de défilement des tubes métalliques 1 à contrôler.

9. Dispositif suivant revendication 8 caractérisé en ce que le solénoïde de détection (5, 6) comporte deux enroulements (5A5B, 6A6B) montés côte à côte en opposition.

10. Dispositif suivant revendication 8 ou 9 caractérisé en ce que les moyens de génération des champs magnétiques alternatifs comprennent deux solénoïdes (3, 4) disposés à la suite l'un de l'autre le long de l'axe de défilement et alimentés le premier à la fréquence la plus basse et le second à la fréquence la plus élevée, chacun de ces deux solénoïdes entourant un solénoïde de détection (5, 6) relié aux moyens de mesure de l'amplitude des interactions et de comparaison de la différence en décibels de ces amplitudes avec un seuil de rejet.

11. Dispositif suivant l'une des revendications 8 à 10 caractérisé en ce que les solénoïdes encerclent le tube à contrôler.

12. Dispositif suivant l'une des revendications 6 à 11 caractérisé en ce que des moyens de mémorisation permettent de mettre en mémoire l'amplitude de chaque signal de défaut détecté au passage à travers le premier solénoïde de détection pour le faire correspondre au signal relatif à ce même défaut détecté au passage à travers le deuxième solénoïde, en tenant compte du temps de parcours nécessaire grâce à des moyens de calcul.

13. Dispositif suivant l'une des revendications 6 à 8 caractérisé en ce que les moyens de génération des champs magnétiques alternatifs comprennent un seul solénoïde qui est excité simultanément au moyen de deux sources de courant de fréquences différentes et en ce que les moyens de détection des interactions entre défauts et courants de Foucault comportent un seul solénoïde de détection, des moyens de discrimination permettant de séparer les signaux d'interaction des courants de Foucault de fréquences différentes avec un même défaut.

14. Dispositif suivant l'une des revendications 6 à 13 caractérisé en ce que, lorsqu'on contrôle un tube en un métal alliage magnétique, il comporte un enroulement (2) dont l'axe correspond à l'axe de défilement du tube alimenté en courant continu d'une intensité suffisante pour saturer ce métal ou alliage et ramener sa perméabilité à un niveau comparable à celle d'un métal ou alliage amagnétique, les dimensions de cet enroulement étant déterminées de façon qu'elles permettent de loger à la fois le ou les solénoïdes (3,4) générateurs de champs alternatifs et le ou les solénoïdes de détection (5, 6).

15. Application du procédé et du dispositif suivant l'une des revendications 1 à 14 à la détection de défauts de tubes métalliques par courants de Foucault caractérisée en ce que les tubes contrôlés sont des tubes de révolution de diamètre extérieur inférieur à 200 mm et d'épaisseur de parois comprise entre 1 et 20 % du diamètre.

## Patentansprüche

1. Verfahren zum Erfassen von Fehlern in der Wand eines Metallrohrs im Durchlauf entlang einer Achse, bei dem die Ausbildung von Wirbelströmen in dieser Wand durch Erzeugen von zwei Wechselfeldern mit bestimmten, unterschiedlichen Frequenzen im Mittel- oder Hochfrequenzbereich bewirkt wird und bei dem die Wechselwirkungen zwischen diesen Wirbelströmen und den inneren oder die Außenfläche des Rohres erreichenden Fehlern erfaßt und die Wechselwirkungen gemessen werden,
**dadurch gekennzeichnet, daß**
zu jedem Fehler die Amplituden von Signalen von Wechselwirkungen dieses Fehlers mit den jeweils den zwei Frequenzen entsprechenden Wirbelströmen gemessen werden, wobei S1 die der niedrigeren Frequenz entsprechende Amplitude und S2 die der anderen, höheren Frequenz entsprechende Amplitude ist, wobei diese Amplituden in Dezibel ausgedrückt werden, dann die Differenz D = S2 - S1 in Dezibel bestimmt wird und mit einer Differenz bzw. einem Ausschußgrenzwert Do verglichen wird, der einem Standardloch entspricht, das von der Außenfläche des Rohrs aus mit einer Tiefe von wenigstens gleich 5% der Wandstärke des Rohrs und nicht mehr als 50% der Wandstärke des Rohrs gebohrt ist, und daß ein Rohr ausgeschieden wird, wenn es wenigstens einen Fehler aufweist, dessen Differenz D kleiner ist als Do.

2. Verfahren nach Anspruch 1, dadurch gekennzeichnet, daß als Ausschußgrenzwert eine Differenz Do verwendet wird, die einem Standardloch entspricht, das von der Außenfläche des Rohrs aus mit einer Tiefe von nicht mehr als 20% der Wandstärke des Rohrs gebohrt ist.

3. Verfahren nach Anspruch 1 oder 2, dadurch gekennzeichnet, daß die niedrigere Frequenz der magnetischen Wechselfelder zwischen 0,5 und 10 kHz und die höhere Frequenz zwischen 20 und 150 kHz liegt.

4. Verfahren nach Anspruch 3, dadurch gekennzeichnet, daß die niedrigere Frequenz des magnetischen Wechselfeldes zwischen 1 und 3 kHz liegt.

5. Verfahren nach einem der Ansprüche 1 bis 4, dadurch gekennzeichnet, daß beim Durchführen der Durchlaufkontrolle der Rohre aus magnetischen Metallen oder Legierungen diese Metalle oder Legierungen durch ein Dauermagnetfeld gesättigt werden, innerhalb dessen die Mittel zum Erzeugen der magnetischen Wechselfelder und die Mittel zum Erfassen der den Wechselwirkungen zwischen den Fehlern und den Wirbelströmen angeordnet sind.

6. Vorrichtung zur Durchführung eines Verfahrens zum Erfassen von Fehlern in der Wand eines Metallrohrs (1) im Durchlauf, wobei die Fehler innere Fehler oder die Außenfläche des Rohrs erreichende Fehler sein können, mit Mitteln zum Bewegen des Metallrohrs (1) mit konstanter Geschwindigkeit entlang einer Achse (X1-X1) und Mitteln zum Erzeugen von magnetischen Wechselfeldern mit zwei bestimmten, verschiedenen Frequenzen im Hoch- und Mittelfrequenzbereich,
**gekennzeichnet durch**
Mittel zum Erfassen der aus den Wechselwirkungen zwischen jedem Fehler und den den zwei Magnetfeldfrequenzen entsprechenden Wirbelströmen resultierenden Signale, Aufzeichnungs- und Meßmittel zum Berechnen der in Dezibel ausgedrückten Differenz D = S2-S1 der in Dezibel ausgedrückten Amplituden S2 bzw. S1 der jeweils für die höhere beziehungsweise die niedrigere der Frequenzen erhaltenen Signale,
Vergleichsmittel zum Feststellen, ob D größer oder kleiner als ein Wert Do ist, der einen Ausscheidungsgrenzwert darstellt, und
Anzeigemittel zum Erzeugen eines Signals zum Ausscheiden des Rohrs, wenn D kleiner ist als Do.

7. Vorrichtung nach Anspruch 6, gekennzeichnet durch Mittel zum Erzeugen zweier magnetischer Wechselfelder, deren Frequenzen beim ersten Feld zwischen 0,5 kHz und 10 kHz und beim zweiten Feld zwischen 20 und 150 kHz liegen.

8. Vorrichtung nach Anspruch 7, dadurch gekennzeichnet, daß die Mittel zum Erzeugen der magnetischen Wechselfelder wenigstens eine Solenoidspule (3, 4) umfassen, innerhalb derer wenigstens eine Erfassungssolenoidspule (5, 6) untergebracht ist, wobei diese Solenoidspulen eine gemeinsame Achse (X1-X1) haben, die auch die Achse der Bewegung der zu kontrollierenden Metallrohre (1) ist.

9. Vorrichtung nach Anspruch 8, dadurch gekennzeichnet, daß die Erfassungssolenoidspule (5, 6) zwei Seite an Seite in Opposition montierte Wicklungen (5A, 5B; 6A, 6B) umfaßt.

10. Vorrichtung nach Anspruch 8 oder 9, dadurch gekennzeichnet, daß die Mittel zum Erzeugen der magnetischen Wechselfelder zwei in Richtung der Bewegungsachse hintereinander angeordnete Solenoidspulen (3, 4) umfassen, von denen die erste mit der niedrigeren und die zweite mit der höheren Frequenz beschaltet wird, und wobei jede dieser zwei Solenoidspulen eine Erfassungssolenoidspule (5, 6) umgibt, die mit den Mitteln zum Messen der Amplitude der Wechselwirkungen und zum Vergleichen der Differenz in Dezibel dieser Amplituden mit einem Ausscheidungsgrenzwert verbunden sind.

11. Vorrichtung nach einem der Ansprüche 8 bis 10, dadurch gekennzeichnet, daß die Solenoidspulen das zu kontrollierende Rohr rings umgeben.

12. Vorrichtung nach einem der Ansprüche 6 bis 11, dadurch gekennzeichnet, daß Speichermittel es ermöglichen, die Amplitude jedes einzelnen beim Durchgang durch die erste Erfassungssolenoidspule erfaßten Fehlersignals zu speichern und es mit dem diesem Fehler entsprechenden, beim Durchgang durch die zweite Solenoidspule erfaßten Signal unter Berücksichtigung der notwendigen Durchlaufzeit mit Hilfe von Rechenmitteln in Beziehung zu setzen.

13. Vorrichtung nach einem der Ansprüche 6 bis 8, dadurch gekennzeichnet, daß die Mittel zum Erzeugen der magnetischen Wechselfelder eine einzelne Solenoidspule umfassen, die gleichzeitig mittels zweier Stromquellen mit unterschiedlichen Frequenzen erregt wird, und daß die Mittel zum Erfassen der Wechselwirkungen zwischen Fehlern und Wirbelströmen eine einzelne Erfassungssolenoidspule und Unterscheidungsmittel zum Trennen der Signale der Wechselwirkungen der Wirbelströme unterschiedlicher Frequenz mit dem gleichen Fehler umfassen.

14. Vorrichtung nach einem der Ansprüche 6 bis 13, dadurch gekennzeichnet, daß sie für die Kontrolle eines Rohrs aus einem magnetischen Metall oder einer magnetischen Legierung eine Wicklung (2) umfaßt, deren Achse der Bewegungsachse des Rohrs entspricht und die mit einem Gleichstrom ausreichender Stärke beschaltet wird, um dieses Metall oder diese Legierung zu sättigen und seine/ihre Permeabilität auf einen Wert zu bringen, der dem eines nichtmagnetischen Metalls oder einer nichtmagnetischen Legierung vergleichbar ist, wobei die Maße dieser Wicklung so bestimmt sind, daß der oder die Solenoidspulen (3, 4) zum Erzeugen der Wechselfelder und die Erfassungssolenoidspulen (5, 6) zusammen darin untergebracht werden können.

15. Verwendung des Verfahrens bzw. der Vorrichtung nach einem der Ansprüche 1 bis 14 zum Erfassen von Fehlern in Metallrohren durch Wirbelströme, dadurch gekennzeichnet, daß die kontrollierten Rohre rotationssymmetrische Rohre mit einem Außendurchmesser von weniger als 200 mm und einer Wandstärke zwischen 1 und 20% des Durchmessers sind.

## Claims

1. A method of detecting in a sequence passing according to one axis faults which exist in the wall of a metal tube in which eddy currents are caused to be formed in this wall by generation of two alternating fields of different specific frequencies within the range of the medium and high frequencies, and in which the interactions between these eddy currents and the faults which may be either internal faults or faults opening on the outside surface of the tube are detected and the interactions are measured, characterised in that for each fault, the amplitudes of the signals of interactions of this fault with the eddy currents corresponding to each of these two frequencies are measured, the amplitude S1 being that which corresponds to the least high frequency while the amplitude S2 is that corresponding to the other higher frequency, these amplitudes being expressed in decibels, and in that the difference D = S2 - S1 is then determined, being expressed in decibels and is compared with a rejection threshold or difference Do which corresponds to a standard hole pierced from the outside surface of the tube of specific depth at least equal to 5% of the thickness of the tube wall and not greater than 50% of the thickness of the tube wall, a tube comprising at least one fault having a difference D less than Do being rejected.

2. Method according to claim 1, characterised in that as a rejection threshold, a difference Do is employed which corresponds to a standard hole pierced from the outside surface of the tube of a depth not exceeding 20% of the thickness of the tube wall.

3. A method according to claim 1 or 2, characterised in that the less high frequency of the alternating magnetic fields is comprised between 0.5 and 10 Khz while the higher is between 20 and 150 Khz.

4. A method according to claim 3, characterised in that the less high frequency of the alternating magnetic field is comprised between 1 and 3Khz.

5. A method according to one of claims 1 to 4, characterised in that,, when the passing stream of magnetic alloy or metal tubes are being inspected, these metals or alloys become saturated with a continuous magnetic field within which there are means of generating the alternating magnetic fields and the means of detecting signals corresponding to the interactions between the faults and the eddy currents.

6. An apparatus which makes it possible to carry out a method of using eddy currents to detect faults existing in the walls of a passing stream of metal tubes (1) said faults being either internal faults or faults opening on the outside surface of the tube and comprising means which make it possible to pass said metal tube (1) at a constant speed according to an axis (X1-X1),and means of generating alternating magnetic fields at two specific and different frequencies within the range comprising the medium and high frequencies, characterized in that the apparatus comprises means of detecting the signals resulting from the interaction between each fault and the eddy currents corresponding to each of the two frequencies of the magnetic fields, recording and measuring means making it possible to calculate the difference in decibels D = S2-S1 of the amplitudes expressed in decibels of the signals S2 and S1 obtained respectively at the higher and lower frequencies and means of comparison which make it possible to establish whether D is greater than or less than a value Do which constitutes a rejection threshold, signalling means which make it possible for a tube rejection signal to be displayed if D is less than Do.

7. An apparatus according to claim 6, characterised in that it comprises means which make it possible to produce two alternating magnetic fields the frequencies of which are, in the case of the first field, between 0.5 Khz and 10 Khz and, for the second, are between 20 and 150 Khz.

8. An apparatus according to claim 7, characterised in that the means of generating alternating magnetic fields comprise at least one solenoid (3, 4) inside which is housed at least one detection solenoid (5, 6), these solenoids having a common axis (X1-X1) which is likewise the axis of passage of the metal tubes (1) which are to be inspected.

9. An apparatus according to claim 8, characterised in that the detection solenoid (5, 6) comprises two windings (5A, 5B; 6A, 6B) mounted side by side and in opposition.

10. An apparatus according to claim 8 or 9, characterised in that the means of generating alternating magnetic fields comprise two solenoids (3, 4) disposed one after the other along the axis of passage and supplied in the first case at the lower frequency and in the second case at the higher frequency, each of these two solenoids enclosing a detection solenoid (5, 6) connected to means of measuring the amplitude of interactions and comparing the difference in decibels between these amplitudes and a rejection threshold.

11. An apparatus according to one of claims 8 to 10, characterised in that the solenoids enclose the tube to be inspected.

12. An apparatus according to one of claims 6 to 11, characterised in that memory means make it possible to store in a memory the amplitude of each signal denoting a fault detected upon passage through the first detection solenoid in order to cause it to correspond with the signal relating to the same fault detected upon passage through the second solenoid, calculating means making it possible to take into account the necessary travel time.

13. An apparatus according to one of claims 6 to 8, characterised in that the means of generating alternating magnetic fields comprise a single solenoid which is energised simultaneously by two current sources of different frequencies and in that the means of detecting interactions between faults and eddy currents comprise a single detection solenoid, discriminating means making it possible to separate the signals for interaction of eddy currents of different frequencies with one and the same fault.

14. An apparatus according to one of claims 6 to 13, characterised in that when one is inspecting a tube of a magnetic metal alloy, it comprises a winding (2), the axis of which corresponds to the axis of passage of the tube supplied with direct current of a sufficient strength to saturate the metal or alloy and bring its permeability to a level comparable with that of a non-magnetic metal or alloy, the dimensions of the said winding being so determined that they make it possible to accommodate both the solenoid or solenoids (3, 4) which generate alternating fields and the detection solenoid or solenoids (5, 6).

15. Application of the method and the apparatus according to one of claims 1 to 14 to the detection of faults in metal tubes by using eddy currents, characterised in that the tubes inspected are tubes of revolution and have an outside diameter less than 200 mm, their wall thickness being comprised between 1 and 20% of their diameter.
